# EUROPEAN PATENT APPLICATION

(11) **EP 4 625 776 A1**
(43) Date of publication of application: **01.10.2025**
(21) Application number: 25165607.0
(22) Date of filing: 24.03.2025
(51) Int. Cl.: H02K 5/20, H02K 41/02, H02K 3/50

(54) **STATOR MANDREL FOR LINEAR MOTOR, STATOR ASSEMBLY, LINEAR MOTOR, SUSPENSION SYSTEM, AND VEHICLE**

(30) Priority: 29.03.2024 CN 202410389096
(71) Applicant: BYD Company Limited, Shenzhen, Guangdong 518118 (CN)
(72) Inventor: LIU, Jun, Shenzhen, 518118 (CN); MA, Bingqing, Shenzhen, 518118 (CN); TAN, Guodong, Shenzhen, 518118 (CN)
(74) Representative: Mathys & Squire

(57) **Abstract**

The present disclosure discloses a stator mandrel for a linear motor, a stator assembly, a linear motor, a suspension system, and a vehicle. A cooling water channel is arranged in a shaft wall of the stator mandrel. The cooling water channel includes a liquid inlet channel. The liquid inlet channel includes an upstream liquid inlet channel and a downstream liquid inlet channel arranged in sequence in an axial direction of the stator mandrel and in communication with each other. A radius angle corresponding to a circumferential direction of the downstream liquid inlet channel is a first center angle α. A radius angle corresponding to a circumferential direction of the upstream liquid inlet channel is a second center angle β. α>β. According to the stator mandrel for a linear motor in embodiments of the present disclosure, the liquid inlet channel can be distributed on the stator mandrel to not only satisfy a cooling capacity demand but also ensure structural strength of the stator mandrel.

## Description

### FIELD

The present disclosure relates to the technical field of motors, and more specifically, to a stator mandrel for a linear motor, a stator assembly, a linear motor, a suspension system, and a vehicle.

### BACKGROUND

In the related art, a linear motor includes a mover and a stator mandrel. The mover moves linearly relative to the stator mandrel. During operation, the linear motor generates a large amount of heat, which accelerates aging of the linear motor and shortens the service life of the linear motor.

To resolve the problem of overheating of the linear motor, the related art provides a solution of arranging a cooling water channel on the mover or the stator mandrel. However, the layout of the cooling water channel is improper, resulting in inefficient cooling and heat dissipation effects. Improvements are still required.

### SUMMARY

The present disclosure is intended to resolve at least one of technical problems in the related art. The present disclosure provides a stator mandrel for a linear motor, in which a cooling water channel is properly distributed to improve heat dissipation and cooling effects.

The present disclosure further provides a stator assembly having the foregoing stator mandrel for a linear motor.

The present disclosure further provides a linear motor having the foregoing stator assembly.

The present disclosure further provides a suspension system having the foregoing linear motor.

The present disclosure further provides a vehicle having the foregoing linear motor.

According to the stator mandrel for a linear motor in embodiments of the present disclosure, a cooling water channel is arranged in a shaft wall of the stator mandrel. The cooling water channel includes a liquid inlet channel. The liquid inlet channel includes an upstream liquid inlet channel and a downstream liquid inlet channel arranged in sequence in an axial direction of the stator mandrel and in communication with each other. A radius angle corresponding to a circumferential direction of the downstream liquid inlet channel is a first center angle α. A radius angle corresponding to a circumferential direction of the upstream liquid inlet channel is a second center angle β. α>β.

According to the stator mandrel for a linear motor in the embodiments of the present disclosure, a heat exchange and cooling capacity of the liquid inlet channel for the stator mandrel may be distributed more to a section where the downstream liquid inlet channel is located. During the fitting of the stator mandrel, parts generating a large amount of heat may be arranged on the section where the downstream liquid inlet channel is located, and parts generating a small amount of heat may be arranged on a section where the upstream liquid inlet channel is located. In this way, cooling capacities may be distributed through the liquid inlet channel based on a demand, to improve heat dissipation and cooling effects. The upstream liquid inlet channel occupies a small space of the shaft wall, which helps reduce impact on structural strength of the stator mandrel.

In this way, the liquid inlet channel can be distributed on the stator mandrel to not only satisfy a cooling capacity demand but also ensure structural strength of the stator mandrel.

In some embodiments, at least two downstream liquid inlet channels are provided. Two adjacent downstream liquid inlet channels are spaced apart by a first water channel bar. At least one upstream liquid inlet channel is provided. A quantity of the downstream liquid inlet channels is greater than a quantity of the at least one upstream liquid inlet channel. The first center angle α is a sum of radius angles corresponding to circumferential directions of the downstream liquid inlet channels. The second center angle β is a sum of radius angles corresponding to circumferential directions of the at least one upstream liquid inlet channel.

In some embodiments, the downstream liquid inlet channels are arranged spaced away in a circumferential direction of the stator mandrel. The downstream liquid inlet channels are arranged to extend in the axial direction of the stator mandrel. Ends of the downstream liquid inlet channels in communication with the upstream liquid inlet channel are brought into communication in the circumferential direction to form a first arc connecting channel.

In some embodiments, inner walls of two ends of the downstream liquid inlet channel in the circumferential direction are arc walls.

In some embodiments, a distance between the upstream liquid inlet channel and an axis of the stator mandrel is greater than a distance between the downstream liquid inlet channel and the axis of the stator mandrel. The liquid inlet channel includes a transitional liquid inlet flow channel connected between the upstream liquid inlet channel and the downstream liquid inlet channel.

In some embodiments, in a direction from the upstream liquid inlet channel to the downstream liquid inlet channel, a distance between the transitional liquid inlet flow channel and the axis of the stator mandrel gradually decreases.

In some embodiments, in a direction from the upstream liquid inlet channel to the downstream liquid inlet channel, a flow area of the transitional liquid inlet flow channel first gradually decreases and then gradually increases.

In some embodiments, the upstream liquid inlet channel includes a liquid inlet transition section adjacent to an inlet end of the liquid inlet channel. A flow area of the liquid inlet transition section gradually increases in a direction away from the inlet end.

In some embodiments, the cooling water channel includes a liquid outlet channel. The liquid outlet channel includes an upstream liquid outlet channel and a downstream liquid outlet channel arranged in sequence in the axial direction of the stator mandrel and in communication with each other. The upstream liquid outlet channel is in communication with the downstream liquid inlet channel. A water inlet end of the cooling water channel is in communication with the upstream liquid inlet channel. A water outlet end of the cooling water channel is in communication with the downstream liquid inlet channel. The water inlet end and the water outlet end are located on a same end of the stator mandrel.

In some embodiments, a radius angle corresponding to a circumferential direction of the upstream liquid outlet channel is a third center angle θ. A radius angle corresponding to a circumferential direction of the downstream liquid outlet channel is a fourth center angle γ. θ>γ.

In some embodiments, at least two upstream liquid outlet channels are provided. Two adjacent upstream liquid outlet channels are spaced apart by a second water channel bar. At least one downstream liquid outlet channel is provided. A quantity of the upstream liquid outlet channels is greater than a quantity of the at least one downstream liquid outlet channel. The third center angle θ is a sum of radius angles corresponding to circumferential directions of the upstream liquid outlet channels. The fourth center angle γ is a sum of radius angles corresponding to circumferential directions of the at least one downstream liquid outlet channel.

In some embodiments, the upstream liquid outlet channels and the at least one downstream liquid inlet channel are arranged spaced away in the circumferential direction of the stator mandrel. The upstream liquid outlet channels are arranged to extend in the axial direction of the stator mandrel. Ends of the upstream liquid outlet channels in communication with the downstream liquid outlet channel are brought into communication in the circumferential direction to form a second arc connecting channel.

In some embodiments, the cooling water channel includes a turning connection channel. The turning connection channel is in communication with the upstream liquid outlet channel and the downstream liquid inlet channel, and is located on ends of the upstream liquid outlet channel and the downstream liquid inlet channel away from the upstream liquid inlet channel.

In some embodiments, a radial dimension of the turning connection channel is less than a radial dimension of the upstream liquid outlet channel, and/or the radial dimension of the turning connection channel is less than a radial dimension of the downstream liquid inlet channel.

In some embodiments, a distance between the upstream liquid outlet channel and the axis of the stator mandrel is less than a distance between the downstream liquid outlet channel and the axis of the stator mandrel. The liquid outlet channel includes a transitional liquid outlet flow channel connected between the upstream liquid outlet channel and the downstream liquid outlet channel.

In some embodiments, in a direction from the upstream liquid outlet channel to the downstream liquid outlet channel, a distance between the transitional liquid outlet flow channel and the axis of stator mandrel gradually increases.

In some embodiments, in a direction from the upstream liquid outlet channel to the downstream liquid outlet channel, a flow area of the transitional liquid outlet flow channel first gradually decreases and then gradually increases.

In some embodiments, the downstream liquid outlet channel includes a liquid outlet transition section adjacent to an outlet end of the liquid outlet channel. A radial dimension of the liquid outlet transition section gradually decreases in a direction toward the outlet end.

The stator assembly in the embodiments of the present disclosure includes an excitation assembly, a conductive assembly, and the stator mandrel in the embodiments of the present disclosure. The excitation assembly is arranged on an outer side of the stator mandrel corresponding to the downstream liquid inlet channel. The downstream liquid inlet channel is configured to exchange heat with the excitation assembly. The conductive assembly is arranged on the stator mandrel corresponding to the upstream liquid inlet channel. The upstream liquid inlet channel is configured to exchange heat with the conductive assembly.

According to the stator assembly in the embodiments of the present disclosure, the foregoing stator mandrel is arranged, and a heat exchange and cooling capacity of the liquid inlet channel for the stator mandrel may be distributed more to a section where the downstream liquid inlet channel is located. During fitting of the stator mandrel, parts generating a large amount of heat may be arranged on the section where the downstream liquid inlet channel is located, and parts generating a small amount of heat may be arranged on a section where the upstream liquid inlet channel is located. In this way, cooling capacities may be distributed through the liquid inlet channel based on a demand, to improve heat dissipation and cooling effects. The upstream liquid inlet channel occupies a small space of the shaft wall, which helps reduce the impact on structural strength of the stator mandrel.

The linear motor in the embodiments of the present disclosure includes a mover assembly and the stator assembly in the embodiments of the present disclosure. The stator assembly and the mover assembly are electromagnetically coupled to drive the mover assembly to move.

According to the linear motor in the embodiments of the present disclosure, the foregoing stator assembly is arranged, and a heat exchange and cooling capacity of the liquid inlet channel for the stator mandrel may be distributed more to a section where the downstream liquid inlet channel is located. During fitting of the stator mandrel, parts generating a large amount of heat may be arranged on the section where the downstream liquid inlet channel is located, and parts generating a small amount of heat may be arranged on a section where the upstream liquid inlet channel is located. In this way, cooling capacities may be distributed through the liquid inlet channel based on a demand, to improve heat dissipation and cooling effects. The upstream liquid inlet channel occupies a small space of the shaft wall, which helps reduce impact on structural strength of the stator mandrel.

The suspension system in the embodiments of the present disclosure includes the linear motor in the embodiments of the present disclosure.

According to the suspension system in the embodiments of the present disclosure, the foregoing linear motor is arranged, and a heat exchange and cooling capacity of the liquid inlet channel for the stator mandrel may be distributed more to a section where the downstream liquid inlet channel is located. During fitting of the stator mandrel, parts generating a large amount of heat may be arranged on the section where the downstream liquid inlet channel is located, and parts generating a small amount of heat may be arranged on a section where the upstream liquid inlet channel is located. In this way, cooling capacities may be distributed through the liquid inlet channel based on a demand, to improve heat dissipation and cooling effects. The upstream liquid inlet channel occupies a small space of the shaft wall, which helps reduce impact on structural strength of the stator mandrel.

The vehicle in the embodiments of the present disclosure includes the suspension system in the embodiments of the present disclosure.

According to the vehicle in the embodiments of the present disclosure, the foregoing suspension system arranged, and a heat exchange and cooling capacity of the liquid inlet channel for the stator mandrel may be distributed more to a section where the downstream liquid inlet channel is located. During fitting of the stator mandrel, parts generating a large amount of heat may be arranged on the section where the downstream liquid inlet channel is located, and parts generating a small amount of heat may be arranged on a section where the upstream liquid inlet channel is located. In this way, cooling capacities may be distributed through the liquid inlet channel based on a demand, to improve heat dissipation and cooling effects. The upstream liquid inlet channel occupies a small space of the shaft wall, which helps reduce impact on structural strength of the stator mandrel.

Part of additional aspects and advantages of the present disclosure is provided in the following description. The part becomes apparent from the following description, or is learned by practice of the present disclosure.

### BRIEF DESCRIPTION OF THE DRAWINGS

The above and/or additional aspects and advantages of the present disclosure become apparent and comprehensible from description of embodiments provided with reference to the following drawings.
FIG. 1 is a top view of a stator assembly according to an embodiment of the present disclosure;
FIG. 2 is a sectional view along a line A-A in FIG. 1;
FIG. 3 is an enlarged view of B in FIG. 2;
FIG. 4 is an enlarged view of C in FIG. 2;
FIG. 5 is a side view of a stator mandrel according to an embodiment of the present disclosure;
FIG. 6 is a sectional view of D-D based on FIG. 5;
FIG. 7 is a sectional view of E-E based on FIG. 5;
FIG. 8 is a schematic diagram of a cooling water channel according to an embodiment of the present disclosure, where the schematic diagram is not a diagram of an entity on a stator mandrel, and instead, the schematic diagram simulates an outer shape of a cooling water channel which is filled with a cooling medium.;
FIG. 9 is a schematic structural diagram of a suspension system according to an embodiment of the present disclosure; and
FIG. 10 is a schematic structural diagram of a vehicle according to an embodiment of the present disclosure.

In the drawings:
Vehicle 30000, Suspension system 20000, Linear motor 10000;
Stator assembly 1000, Mover assembly 2000;
Stator mandrel 100, Excitation assembly 200, Conductive assembly 300;
Shaft wall 10, Water inlet end 101, Water outlet end 102, First water channel bar 103, Second water channel bar 104;
Axis N1;
Cooling water channel 1;
Liquid inlet channel 11, Inlet end 110, Upstream liquid inlet channel 111, Liquid inlet transition section 1111, First center angle α, Downstream liquid inlet channel 112, First arc connecting channel 1121, Second center angle β, Transitional liquid inlet flow channel 113; First axial surface S1;
Liquid outlet channel 12, Outlet end 120, Upstream liquid outlet channel 121, Second arc connecting channel 1212, Third center angle θ, Downstream liquid outlet channel 122, Liquid outlet transition section 1221, Fourth center angle γ, Transitional liquid outlet flow channel 123, Second axial surface S2;
Turning connection channel 13.

### DETAILED DESCRIPTION

Embodiments of the present disclosure are described in detail below, and examples of the embodiments are shown in drawings. Same or similar reference numerals throughout the description represent same or similar elements or elements having same or similar functions. The embodiments described below with reference to the drawings are exemplary, which are merely used for explaining the present disclosure, and cannot be construed as a limitation on the present disclosure.

In the description of the present disclosure, it should be understood that orientation or position relationships indicated by terms such as "thickness", "axial direction", "radial direction", and "circumferential direction" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure. In addition, a feature defined with "first" or "second" may explicitly or implicitly include one or more features. In the description of the present disclosure, unless otherwise stated, "multiple" means two or more.

In the description of the present disclosure, it should be noted that, unless otherwise explicitly specified or defined, terms "mount", "connect", and "connection" are to be understood in a broad sense. For example, the connection may be a fixed connection, a detachable connection, or an integral connection; or may be a mechanical connection or an electrical connection; or may be a direct connection, an indirect connection through a middle medium, or internal communication between two elements. A person of ordinary skill in the art may understand the specific meanings of the foregoing terms in the present disclosure according to specific situations.

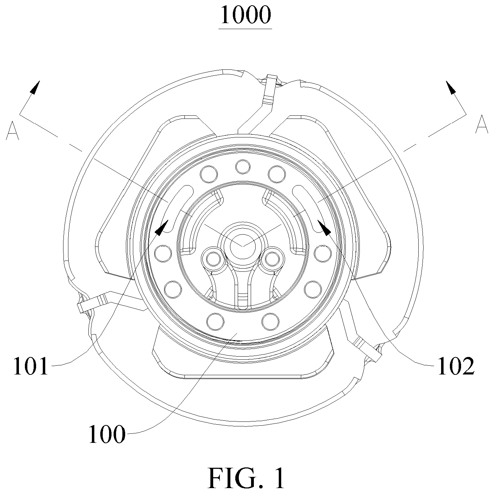

A stator mandrel 100 for a linear motor, a stator assembly 1000, a linear motor 10000, a suspension system 20000, and a vehicle 30000 in the embodiments of the present disclosure are described below with reference to FIG. 1 to FIG. 10.

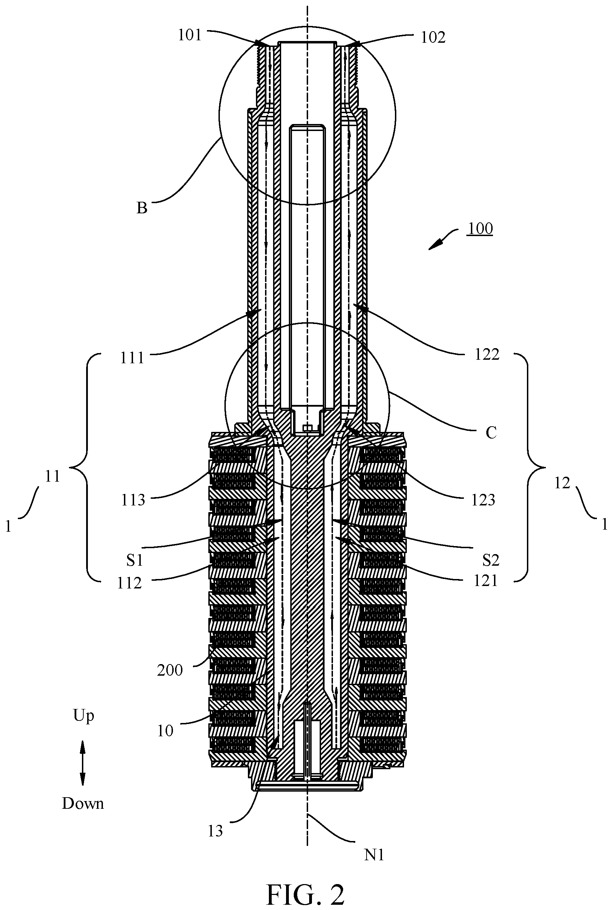

As shown in FIG. 1 and FIG. 2, in the stator mandrel 100 for a linear motor in the embodiments of the present disclosure, a cooling water channel 1 is arranged in a shaft wall 10 of the stator mandrel 100. The cooling water channel 1 can accommodate a cooling medium and direct the cooling medium to flow. The cooling medium absorbs heat of the stator mandrel 100, to reduce a temperature of the stator mandrel 100.

The cooling water channel 1 includes a liquid inlet channel 11. The liquid inlet channel 11 includes an upstream liquid inlet channel 111 and a downstream liquid inlet channels 112. The upstream liquid inlet channel 111 and the downstream liquid inlet channel 112 are in communication with each other and arranged in sequence in an axial direction of the stator mandrel 100. The cooling medium flows from the upstream liquid inlet channel 111 to the downstream liquid inlet channel 112.

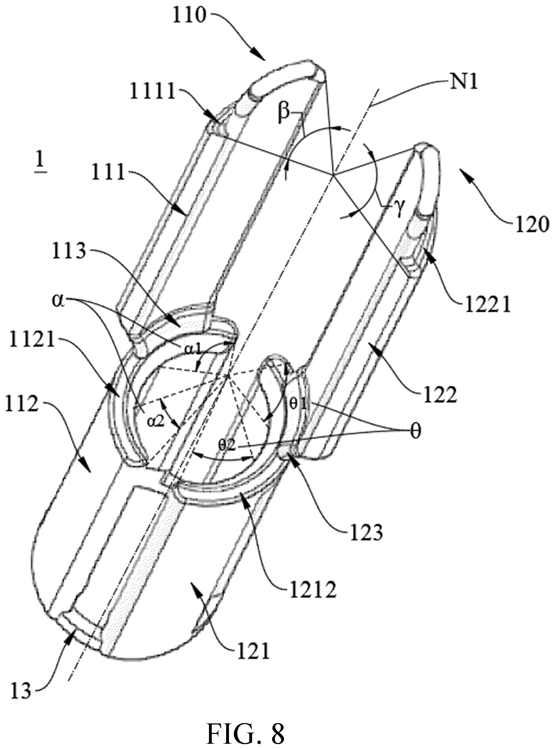

Referring to FIG. 8, a radius angle corresponding to a circumferential direction of the downstream liquid inlet channels 112 is a first center angle α. A radius angle corresponding to a circumferential direction of the upstream liquid inlet channels 111 is a second center angle β. α>β. A footprint of the downstream liquid inlet channel 112 in a circumferential direction of the stator mandrel 100 is greater than a footprint of the upstream liquid inlet channel 111 in the circumferential direction of the stator mandrel 100. In this way, a heat exchange and cooling capability of the liquid inlet channel 11 for the stator mandrel 100 may be distributed more to a section where the downstream liquid inlet channel 112 is located. During fitting of the stator mandrel 100, parts generating a large amount of heat may be arranged on the section where the downstream liquid inlet channel 112 is located, and parts generating a small amount of heat may be arranged on a section where the upstream liquid inlet channel 111 is located. In this way, cooling capacities may be distributed through the liquid inlet channel 11 based on a demand, to improve heat dissipation and cooling effects. The upstream liquid inlet channel 111 occupies a small space of the shaft wall 10, which helps reduce impact on structural strength of the stator mandrel 100.

In this way, the liquid inlet channel 11 can be distributed on the stator mandrel 100 to not only satisfy a cooling capacity demand but also ensure structural strength of the stator mandrel 100.

In the related art, a partition plate is arranged in the shaft hole of the stator mandrel, and the cooling water channel is arranged between the partition plate and the shaft wall. Different from the related art, in the present disclosure, the partition plate arranged in the shaft hole of the stator mandrel is omitted. Therefore, the shaft hole of the stator mandrel 100 is not occupied, so that the structure is more compact. In addition, the cooling water channel 1 is arranged in the shaft wall 10 of the stator mandrel 100, which has a good sealing effect, and helps reduce the leakage risk of the cooling medium.

In some preferred examples, an excitation assembly 200 is sleeved on the stator mandrel 100 in the circumferential direction. The excitation assembly 200 is arranged to exactly face the downstream liquid inlet channel 112. The downstream liquid inlet channel 112 increases a heat dissipation area and improves a heat dissipation effect. During operation of the linear motor 10000, heat of the excitation assembly 200 is transferred through the cooling medium of the downstream liquid inlet channel 112 for dissipation. The cooling medium in the downstream liquid inlet channel 112 is heated up and forms a temperature difference with the cooling medium in the upstream liquid inlet channel 111. In this way, convection is formed between the downstream liquid inlet channel 112 and the upstream liquid inlet channel 111, which accelerates flowing of the cooling medium toward the downstream liquid inlet channels 112, and reduces regions of flow stagnation of the cooling medium, thereby improving a heat dissipation effect and improving heat dissipation efficiency.

In some embodiments, the excitation assembly 200 includes a winding. The winding is a component in the linear motor 10000 generating a relatively large amount of heat, and is arranged in the circumferential direction of the stator mandrel 100. Therefore, the excitation assembly 200 may be sleeved on an outer periphery of the downstream liquid inlet channel 112. In this way, heat of the winding can be dissipated more effectively. A larger radius angle corresponding to the circumferential direction of the downstream liquid inlet channel 112 leads to more uniform heat dissipation.

Optionally, a dimension of the excitation assembly 200 in the axial direction of the stator mandrel 100 is greater than a dimension of the downstream liquid inlet channel 112 in the axial direction. In other words, the excitation assembly 200 may be arranged opposite to a part of the upstream liquid inlet channel 111 and an entirety of the downstream liquid inlet channel 112. Optionally, the dimension of the excitation assembly 200 in the axial direction of the stator mandrel 100 is less than the dimension of the downstream liquid inlet channel 112 in the axial direction, and the excitation assembly 200 may be arranged opposite to a part of the downstream liquid inlet channel 112.

Based on the above, the downstream liquid inlet channel 112 has higher heat absorption efficiency than the upstream liquid inlet channel 111, and the cooling medium in the downstream liquid inlet channel 112 has a higher temperature than the cooling medium in the upstream liquid inlet channel 111. In this way, convection is formed between the downstream liquid inlet channel 112 and the upstream liquid inlet channel 111, which increases the flowing speed of the cooling medium toward the downstream liquid inlet channel 112, and reduces the regions of flow stagnation of the cooling medium, thereby improving the heat dissipation effect. In addition, a larger heat dissipation area is provided in a place on the stator mandrel 100 with a large amount of heat, to equalize the structural strength and a heat dissipation capability of the stator mandrel 100, and improve the heat dissipation efficiency of the stator mandrel 100.

According to the stator mandrel 100 for a linear motor in the embodiments of the present disclosure, the footprint of the downstream liquid inlet channel 112 in the circumferential direction of the stator mandrel 100 is greater than the footprint of the upstream liquid inlet channel 111 in the circumferential direction of the stator mandrel 100. Therefore, the upstream liquid inlet channel 111 occupies a small space of the shaft wall 10, which helps reduce the impact on the structural strength of the stator mandrel 100, increase a footprint of the liquid inlet channel 11 in the circumferential direction of the stator mandrel 100, and increase a contact area between the cooling medium and the place on the stator mandrel 100 with a high cooling capacity demand, thereby improving the heat dissipation capability and the heat dissipation efficiency of the stator mandrel 100.

As shown in FIG. 8, in some embodiments, at least two downstream liquid inlet channels 112 are provided, two adjacent downstream liquid inlet channels 112 are spaced apart by a first water channel bar 201, at least one upstream liquid inlet channel 111 is provided, and a quantity of the downstream liquid inlet channels 112 is greater than a quantity of the at least one upstream liquid inlet channel 111. A quantity of the liquid inlet channels 11 increases from upstream to downstream. Arranging the first water channel bar 103 among the multiple downstream liquid outlet channels 122 can improve the structural strength of the stator mandrel 100, and reduce the impact of providing the liquid inlet channel 11 on the structural strength of the stator mandrel 100. The first center angle α is a sum of radius angles corresponding to circumferential directions of the downstream liquid inlet channels 112. The second center angle β is a sum of radius angles corresponding to circumferential directions of the at least one upstream liquid inlet channel 111. From upstream to downstream, not only a quantity of liquid inlet channels 11 increases, but also the footprint of the liquid inlet channels 11 in the circumferential direction of the stator mandrel 100 increases, which can further improve the heat dissipation capability of the stator mandrel 100 and improve the heat dissipation efficiency.

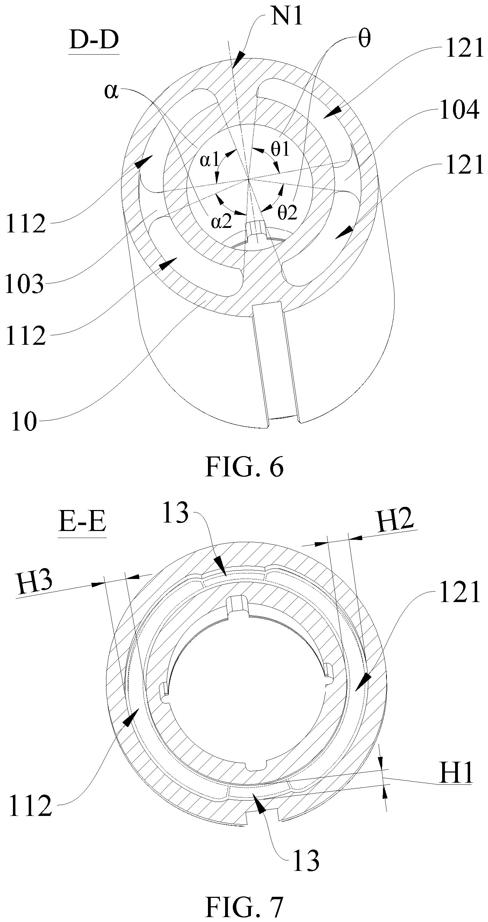

As shown in FIG. 8, in some preferred examples, one upstream liquid inlet channel 111 is provided, two downstream liquid inlet channels 112 are provided, and are spaced apart by one first water channel bar 103. An outlet of the upstream liquid inlet channel 111 is in communication with the multiple downstream liquid inlet channels 112. The cooling medium enters the two downstream liquid inlet channels 112 from the upstream liquid inlet channel 111. In such a way that a smaller quantity of upstream liquid inlet channels 111 are brought into communication with a larger quantity of downstream liquid inlet channels 112, a quantity of liquid inlets of the upstream liquid inlet channels 111 can be reduced. The cooling medium enters the cooling water channel 1 through a water inlet end 101 of the cooling water channel 1. When the water inlet end 101 of the cooling water channel 1 is a liquid inlet of the upstream liquid inlet channel 111, the cooling water channel 1 may have one water inlet end 101, and the water inlet end 101 is in communication with the upstream liquid inlet channel 111. The cooling medium enters the cooling water channel 1 through the water inlet end 101, passes through the liquid inlet and a liquid outlet of the upstream liquid inlet channel 111, and then flows through the downstream liquid inlet channels 112. In this way, a structural design of the liquid inlet can be simplified, thereby improving sealing reliability and reducing the leakage risk of the cooling medium. Referring to FIG. 6 and FIG. 8, two downstream liquid inlet channels 112 are correspondingly provided. A radius angle corresponding to a circumferential direction of one of the downstream liquid inlet channels 112 is α1. A radius angle corresponding to a circumferential direction of the other of the downstream liquid inlet channels 112 is α2. The first center angle α is a sum of the radius angle α1 corresponding to the circumferential direction of one of the downstream liquid inlet channels 112 and the radius angle α2 corresponding to the circumferential direction of the other of the downstream liquid inlet channels 112. In other words, α, α1, and α2 satisfy the following equation: α=α1+α2. In FIG. 8, one upstream liquid inlet channel 111 is provided. A second center angle of the upstream liquid inlet channel 111 is β. The second center angle β is greater than the first center angle α. In other words, the footprint of the downstream liquid inlet channels 112 in the circumferential direction of the stator mandrel 100 is greater than the footprint of the upstream liquid inlet channel 111 in the circumferential direction of the stator mandrel 100, which increases the contact area between the cooling medium and the stator mandrel 100, and improves the heat dissipation capability and the heat dissipation efficiency.

The quantity of upstream liquid inlet channels 111 may be 1, 2, 3, 4, or the like. The quantity of upstream liquid inlet channels 111 is not limited to the examples. The quantity of downstream liquid inlet channels 112 is greater than the quantity of upstream liquid inlet channels 111, and is not limited to 2, 3, 4, or 5.

As shown in FIG. 8, in some embodiments, the downstream liquid inlet channels 112 are arranged spaced away in the circumferential direction of the stator mandrel 100. The downstream liquid inlet channels 112 are arranged to extend in the axial direction of the stator mandrel 100. Ends of the downstream liquid inlet channel 112 are in communication with the upstream liquid inlet channel 111. The ends the downstream liquid inlet channels 112 in communication with the upstream liquid inlet channel 111 are brought into communication in the circumferential direction to form a first arc connecting channel 1121. In other words, the cooling medium is distributed from the upstream liquid inlet channel 111 to the different downstream liquid inlet channels 112. The cooling medium is distributed through the first arc connecting channel 1121, which helps impact and interference of the first water channel bar 103 on the distribution of the cooling medium. In some preferred examples, a radial dimension of the first arc connecting channel 1121 is equal to a radial dimension of the downstream liquid inlet channel 112, so that the cooling medium can be more evenly distributed to the downstream liquid inlet channels 112, and flow rates of the cooling media accommodated in the different downstream liquid inlet channels 112 do not differ much. In this way, the cooling medium can be fully utilized, and the heat dissipation efficiency can be improved.

As shown in FIG. 1, FIG. 2, and FIG. 6, in some embodiments, inner walls of two ends of the downstream liquid inlet channel 112 in the circumferential direction are arc walls. The arc walls have smoother profiles, allowing the cooling medium to flow more smoothly in the downstream liquid inlet channel 112, which helps reduce the regions of flow stagnation of the cooling medium flows. In a specific embodiment, the stator mandrel 100 has a circular profile. When the inner walls of the two ends of the downstream liquid inlet channel 112 in the circumferential direction are arc walls and inner walls of two ends of the upstream liquid inlet channel 111 in the circumferential direction are arc walls, the downstream liquid inlet channel 112 is closer to the profile of the stator mandrel 100, which helps the structure of the stator mandrel 100 be more stable and reliable.

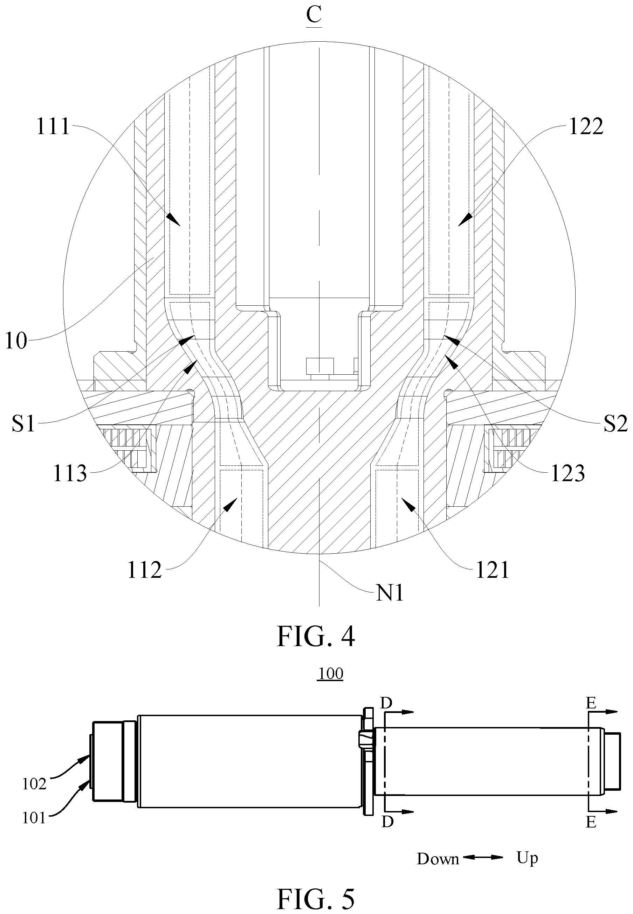

As shown in FIG. 4 and FIG. 8, in some embodiments, a distance between the upstream liquid inlet channel 111 and an axis of the stator mandrel 100 is greater than a distance between the downstream liquid inlet channel 112 and the axis of the stator mandrel 100. In the foregoing specific example, the excitation assembly 200 needs to be sleeved on the stator mandrel 100 corresponding to the downstream liquid inlet channel 112. To make full use of the space, a radial dimension of the stator mandrel 100 corresponding to the downstream liquid inlet channel 112 is less than a radial dimension of the stator mandrel 100 corresponding to the upstream liquid inlet channel 111. Correspondingly, the distance between the upstream liquid inlet channel 111 and the axis N1 is greater than the distance between the downstream liquid inlet channel 112 and the axis N1. Thicknesses of an inner wall and an outer wall of the stator mandrel defining the upstream liquid inlet channel 111 do not differ much, and thicknesses of the inner wall and the outer wall of the stator mandrel defining the downstream liquid inlet channel 112 do not differ much. In this way, a case that the inner wall is excessively thin or the outer wall is excessively thin is avoided, and the structural strength of the stator mandrel 100 is ensured. The liquid inlet channel 11 includes a transitional liquid inlet flow channel. The transitional liquid inlet flow channel is connected between the upstream liquid inlet channel 111 and the downstream liquid inlet channel 112. Providing the transitional liquid inlet flow channel 113 helps reduce the regions of flow stagnation of the cooling medium during flowing from upstream to downstream, thereby improving the heat dissipation capability and the heat dissipation efficiency.

As shown in FIG. 2 to FIG. 4, it should be further noted that, in the radial direction of the stator mandrel 100, the inner wall and the outer wall define the liquid inlet channel 11, the inner wall and the outer wall have uniform thicknesses, a radial outer side surface of the inner wall and a radial inner side surface of the outer wall define the liquid inlet channel 11, and the liquid inlet channel 11 has a first axial surface S1. A distance between the first axial surface S1 and the radial outer side surface of the inner wall is equal to a distance between the first axial surface S1 and the radial inner side surface of the outer wall. A distance between the liquid inlet channel 11 and the axis N1 of the stator mandrel 100 herein is a distance between the first axial surface S1 and the axis N1 of the stator mandrel 100. The distance between the upstream liquid inlet channel 111 and the axis N1 of the stator mandrel 100 is a distance between the inner wall of the stator mandrel 100 corresponding to the upstream liquid inlet channel 111 and the axis N1 of the stator mandrel 100. Similarly, the distance between the downstream liquid outlet channel and the axis of the stator mandrel 100 is a distance between the inner wall of the stator mandrel 100 corresponding to the downstream liquid outlet channel 122 and the axis N1 of the stator mandrel 100.

As shown in FIG. 4, in some embodiments, in a direction from the upstream liquid inlet channel 111 to the downstream liquid inlet channel 112, a distance between the transitional liquid inlet flow channel 113 and the axis N1 of the stator mandrel 100 gradually decreases. The gradual decrease in the distance between the transitional liquid inlet flow channel 113 and the axis N1 optimizes flowing of the cooling medium through the transitional liquid inlet flow channel 113, thereby causing the cooling medium to flow more smoothly, and reducing the regions of flow stagnation of the cooling medium.

As shown in FIG. 4, in some embodiments, in a direction from the upstream liquid inlet channel 111 to the downstream liquid inlet channel 112, a flow area of the transitional liquid inlet flow channel 113 first gradually decreases and then gradually increases. The cooling medium enters the transitional liquid inlet flow channel 113 from the upstream liquid inlet channel 111. A flow area of the transitional liquid inlet flow channel 113 close to the upstream liquid inlet channel 111 first gradually decreases, and a rate of the cooling medium increases, so that the cooling medium approaches the downstream liquid inlet channel 112 at a higher rate, which improves altering of the cooling medium, and improves the heat dissipation efficiency. Then the cooling medium enters the downstream liquid inlet channel 112 from the transitional liquid inlet flow channel 113. A flow area of the transitional liquid inlet flow channel close to the downstream liquid inlet channel 112 gradually increases, and the cooling medium enters the downstream liquid inlet channel 112 at a decreased rate. In this way, the cooling medium can fully exchange heat with the stator mandrel 100 corresponding to the downstream liquid inlet channel 112, thereby further improving a utilization and heat exchange efficiency of the cooling medium.

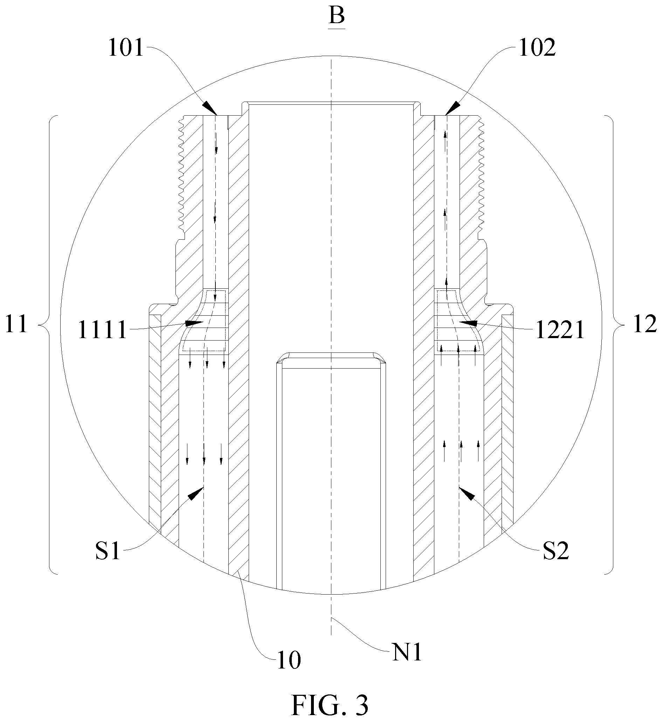

As shown in FIG. 3, in some embodiments, the upstream liquid inlet channel 111 includes a liquid inlet transition section 1111. The liquid inlet transition section 1111 is adjacent to an inlet end 110 of the liquid inlet channel 11. A flow area of the liquid inlet transition section 1111 gradually increases in a direction away from the inlet end 110. The cooling medium enters the cooling water channel through the water inlet end 101. A flow area of the water inlet end 101 is small, which can increase the rate at which the cooling medium enters the cooling water channel. When the cooling medium passes through the liquid inlet transition section 1111, the flow rate decreases. In this case, the cooling medium can fully exchange heat with the shaft wall 10 of the stator mandrel 100, which improves the heat exchange efficiency.

As shown in FIG. 3, in a specific example, a distance between the shaft wall 10 of the stator mandrel 100 corresponding to the inlet end 110 and the axis N1 is small. The inlet end 110 has a small flow area, which reduces a footprint of the cooling water channel 1 in the shaft wall 10, and ensures the structural strength of the stator mandrel 100 corresponding to the water inlet end 101. In addition, the stator mandrel 100 of the upstream liquid inlet channel 111 has a large radial dimension, and the liquid inlet transition section 1111 transitions among different radial dimensions of the upstream liquid inlet channel 111.

As shown in FIG. 3, in some embodiments, the cooling water channel 1 includes a liquid outlet channel 12. The liquid outlet channel 12 includes an upstream liquid outlet channel 121 and a downstream liquid outlet channel 122. The upstream liquid outlet channel 121 and the downstream liquid outlet channel 122 are arranged in sequence in the axial direction of the stator mandrel 100. The upstream liquid outlet channel 121 is in communication with the downstream liquid outlet channel 122. The upstream liquid outlet channel 121 is in communication with the downstream liquid inlet channel 112. A water inlet end 101 of the cooling water channel 1 is in communication with the upstream liquid inlet channel 111. A water outlet end 102 of the cooling water channel 1 is in communication with the downstream liquid inlet channel 112. The water inlet end 101 and the water outlet end 102 are located on a same end of the stator mandrel 100. The cooling medium enters the liquid inlet channel 11 through the water inlet end 101. After the cooling medium exchanges heat with the stator mandrel 100, the cooling medium enters the liquid outlet channel 12 from the downstream liquid inlet channel 112. The cooling medium flows from the upstream liquid outlet channel 121 to the downstream liquid outlet channel 122, and finally flows out through the water outlet end 102. The water inlet end 101 and the water outlet end 102 can alter the cooling medium in the cooling water channel, to improve the heat dissipation efficiency.

It should be further noted that, when the cooling medium passes through the liquid inlet channel 11, the cooling medium exchanges heat with the stator mandrel 100. Then the cooling medium enters the liquid outlet channel 12. The cooling medium has a larger heat exchange capability in the liquid inlet channel 11 than in the liquid outlet channel 12. However, when the cooling medium is in the liquid outlet channel 12, the cooling medium still exchanges heat with the stator mandrel 100, which further improves the utilization and the cooling effect of the cooling medium.

As shown in FIG. 6 and FIG. 8, in some embodiments, a radius angle corresponding to a circumferential direction of the upstream liquid outlet channel 121 is a third center angle θ, a radius angle corresponding to a circumferential direction of the downstream liquid outlet channel 122 is a fourth center angle γ, and θ>γ. In other words, the footprint of the upstream liquid outlet channel 121 in the circumferential direction of the stator mandrel 100 is greater than the footprint of the downstream liquid outlet channels 122 in the circumferential direction of the stator mandrel 100. Therefore, the footprint of the downstream liquid outlet channel 122 in the circumferential direction of the stator mandrel 100 is small, which helps reduce the impact on the structural strength of the stator mandrel 100, and the footprint of the upstream liquid outlet channel 121 in the circumferential direction of the stator mandrel 100 is large, which increases the footprint of the liquid outlet channel 12 in the circumferential direction of the stator mandrel 100, increases the contact area between the cooling medium and the stator mandrel 100, and improves the heat dissipation capability and the heat dissipation efficiency of the stator mandrel 100.

As shown in FIG. 6 and FIG. 8, in some embodiments, at least two upstream liquid outlet channels 121 are provided, two adjacent upstream liquid outlet channels 121 are spaced apart by a second water channel bar 202, at least one downstream liquid outlet channel 122 is provided, and a quantity of the upstream liquid outlet channels 121 is greater than a quantity of the at least one downstream liquid outlet channel 122. A quantity of the liquid outlet channels 12 increases from upstream to downstream. Arranging the second water channel bar 104 among the upstream liquid outlet channels 121 can improve the structural strength of the stator mandrel 100, and reduce the impact of providing the liquid outlet channel 12 on the structural strength of the stator mandrel 100. The third center angle θ is a sum of radius angles corresponding to circumferential directions of the upstream liquid outlet channels 121. The fourth center angle γ is a sum of radius angles corresponding to circumferential directions of the at least one downstream liquid outlet channel 122. From upstream to downstream, not only a quantity of liquid outlet channels 12 increases, but also the footprint of the liquid outlet channels 12 in the circumferential direction of the stator mandrel 100 increases, which improves flowing efficiency of the cooling medium. In this way, the heat dissipation capability of the stator mandrel 100 and the heat dissipation efficiency can be further improved.

As shown in FIG. 6 and FIG. 8, in some preferred examples, one downstream liquid outlet channel 122 is provided, and two upstream liquid outlet channels 121 are provided and are spaced apart by one second water channel bar 104. Outlets of the multiple upstream liquid outlet channels 121 are in communication with the downstream liquid outlet channel 122. The cooling medium enters the downstream liquid outlet channel 122 from the multiple upstream liquid outlet channels 121. In such a way that a larger quantity of upstream liquid outlet channels 121 are brought into communication with a smaller quantity of downstream liquid outlet channels 122, a quantity of liquid outlets of the cooling water channel 1 can be reduced. For example, the cooling water channel 1 may have one liquid outlet. The cooling medium flows out of the cooling water channel 1 through the liquid outlet. In this way, the structural design of the liquid inlet can be simplified, and the leakage risk of the cooling medium can be reduced. Correspondingly, two upstream liquid outlet channels 121 are provided. A radius angle corresponding to a circumferential direction of one of the upstream liquid outlet channels 121 is θ1. A radius angle corresponding to a circumferential direction of the other of the upstream liquid outlet channels 121 is θ2. The first center angle θ is a sum of the radius angle θ1 corresponding to the circumferential direction of one of the upstream liquid outlet channels 121 and the radius angle θ2 corresponding to the circumferential direction of the other of the upstream liquid outlet channels 121. In other words, θ, θ1, and θ2 satisfy the following equation: θ=θ1+θ2. In FIG. 8, one downstream liquid outlet channel 122 is provided. A second center angle of the downstream liquid outlet channel 122 is γ. The second center angle γ is greater than the first center angle θ. In other words, the footprint of the upstream liquid outlet channels 121 in the circumferential direction of the stator mandrel 100 is greater than the footprint of the downstream liquid outlet channels 122 in the circumferential direction of the stator mandrel 100, which increases the contact area between the cooling medium and the stator mandrel 100, and improves the heat dissipation capability and the heat dissipation efficiency.

The quantity of downstream liquid outlet channels 122 may be 1, 2, 3, 4, or the like. The quantity of downstream liquid outlet channels 122 is not limited to the examples. the quantity of upstream liquid outlet channels 121 is greater than the quantity of downstream liquid outlet channels 122, and is not limited to 2, 3, 4, or 5.

As shown in FIG. 8, in some embodiments, the upstream liquid outlet channels 121 and the at least one downstream liquid inlet channel 112 are arranged spaced away in the circumferential direction of the stator mandrel 100. The upstream liquid outlet channels 121 are arranged to extend in the axial direction of the stator mandrel 100. Ends of the upstream liquid outlet channels 121 are in communication with the downstream liquid outlet channel 122. The ends of the upstream liquid outlet channels 121 in communication with the downstream liquid outlet channel 122 are brought into communication in the circumferential direction, to form a second arc connecting channel 1212. In other words, the cooling medium after heat exchange is distributed from the upstream liquid outlet channels 121 to different downstream liquid outlet channels 122. The cooling medium is distributed through the second arc connecting channel 1212, which helps avoid impact and interference of the second water channel bar 104 on the flowing of the cooling medium. In some preferred examples, a radial dimension of the second arc connecting channel 1212 is equal to a radial dimension of the upstream liquid inlet channel 111, so that the cooling medium can be more evenly distributed to the downstream liquid inlet channels 112, and flow rates of the cooling media accommodated in the different downstream liquid inlet channels 112 do not differ much. In this way, the cooling water channel can be fully utilized, altering efficiency of the cooling medium can be improved, and the heat dissipation efficiency can be further improved.

As shown in FIG. 7 and FIG. 8, in some embodiments, the cooling water channel 1 includes a turning connection channel 13. The turning connection channel 13 is in communication with the upstream liquid outlet channel 121 and the downstream liquid inlet channel 112. The turning connection channel 13 is located on ends of the upstream liquid outlet channel 121 and the downstream liquid inlet channel 112 away from the upstream liquid inlet channel 111. The cooling medium may flow from the downstream liquid inlet channel 112 to the upstream liquid outlet channel 121 through the turning connection channel 13. In other words, the cooling medium successively passes through the downstream liquid inlet channel 112, the turning connection channel 13, and the upstream liquid outlet channel 121. Through the turning connection channel 13, occupation of the cooling water channel to the shaft wall 10 is reduced. In the axial direction of the stator mandrel 100, the turning connection channel 13 occupies only a small part of the shaft wall 10, which ensures the structural strength of the stator mandrel 100. In addition, the turning connection channel 13 is located on the end of the downstream liquid inlet channels 112, which provides a large flow area and range for the cooling medium. In this way, the cooling medium can fully absorb the heat of the stator mandrel 100, thereby improving the cooling efficiency.

As shown in FIG. 7, in some embodiments, a radial dimension H1 of the turning connection channel 13 is less than a radial dimension H2 of the upstream liquid outlet channel 121, and/or the radial dimension H1 of the turning connection channel 13 is less than a radial dimension H3 of the downstream liquid inlet channel 112. A radial dimension of a channel refers to a difference between a maximum distance from an inner wall of the channel to the axis N1 of the stator mandrel 100 and a minimum distance from the inner wall of the channel to the axis N1 of the stator mandrel 100.

The radial dimension H1 of the turning connection channel 13 is less than the radial dimension H2 of the upstream liquid outlet channel 121. Alternatively, the radial dimension H1 of the turning connection channel 13 is less than the radial dimension H3 of the downstream liquid inlet channel 112. Alternatively, the radial dimension H1 of the turning connection channel 13 is less than the radial dimension H2 of the upstream liquid outlet channel 121 and less than the radial dimension H3 of the downstream liquid inlet channel 112. The cooling medium flows from the downstream liquid inlet channel 112 to the turning connection channel 13. In terms of the radial dimension, the flow area of the cooling medium decreases, and the flow rate increases. Therefore, the cooling medium is discharged to the upstream liquid outlet channel 121 more quickly, which improves the heat exchange efficiency.

As shown in FIG. 7 and FIG. 8, with reference to the foregoing embodiments, in the axial direction, a dimension of a projection of the turning connection channel 13 on the axis N1 is less than dimensions of projections of the liquid outlet channel 12 and the liquid inlet channel 11 in the axial direction. In the radial direction, the first thickness H1 is less than the second thickness H2 and the third thickness H3. Therefore, the flow area of the turning connection channel 13 is less than the flow areas of the liquid outlet channel 12 and the liquid inlet channel 11, which helps reduce the regions of flow stagnation of the cooling medium, thereby accelerating exchange of the cooling medium with an outside, and improving the heat exchange efficiency.

In a specific example, two upstream liquid outlet channels 121 are provided, two downstream liquid inlet channels 112 are provided, the turning connection channel 13 is in communication with ends of the two upstream liquid outlet channels 121 away from the downstream liquid outlet channels 122. The turning connection channel 13 is in communication with ends of the two downstream liquid inlet channels 112 away from the upstream liquid outlet channels 121. In this way, the structure is simplified.

As shown in FIG. 2, in some embodiments, a distance between the upstream liquid outlet channel 121 and the axis N1 of the stator mandrel 100 is less than a distance between the downstream liquid outlet channel 122 and the axis of the stator mandrel 100. In the foregoing specific example, the excitation assembly 200 needs to be sleeved on the stator mandrel 100 corresponding to the upstream liquid outlet channel 121. To make full use of the space, a radial dimension of the stator mandrel 100 corresponding to the upstream liquid outlet channel 121 is less than a radial dimension of the stator mandrel 100 corresponding to the downstream liquid outlet channel 122. Correspondingly, the distance between the upstream liquid outlet channel 121 and the axis N1 is less than the distance between the downstream liquid outlet channel 122 and the axis N1. In this way, the structural strength of the stator mandrel 100 is ensured. The liquid outlet channel 12 includes a liquid outlet transitional liquid outlet flow channel 123. The transitional liquid outlet flow channel 123 is connected between the upstream liquid outlet channel 121 and the downstream liquid outlet channel 122. Providing the transitional liquid outlet flow channel 123 helps reduce the regions of flow stagnation of the cooling medium during the flowing from upstream to downstream, thereby improving the heat dissipation capability and the heat dissipation efficiency.

As shown in FIG. 2 to FIG. 4, it should be further noted that, in the radial direction of the stator mandrel 100, the inner wall and the outer wall define the liquid outlet channel 12, the inner wall and the outer wall have uniform thicknesses, a radial outer side surface of the inner wall and a radial inner side surface of the outer wall define the liquid outlet channel 12, and the liquid outlet channel 12 has a second axial surface S2. A distance between the second axial surface S2 and the radial outer side surface of the inner wall is equal to a distance between the second axial surface S2 and the radial inner side surface of the outer wall. A distance between the liquid outlet channel 12 and the axis N1 of the stator mandrel 100 herein is a distance between the second axial surface S2 and the axis N1 of the stator mandrel 100.

The distance between the upstream liquid outlet channel 121 and the axis N1 of the stator mandrel 100 herein is a distance between the inner wall of the stator mandrel 100 corresponding to the upstream liquid outlet channel 121 and the axis N1 of the stator mandrel 100. Similarly, the distance between the downstream liquid outlet channel and the axis of the stator mandrel 100 is a distance between the inner wall of the stator mandrel 100 corresponding to the downstream liquid outlet channel 122 and the axis N1 of the stator mandrel 100.

As shown in FIG. 4, in some embodiments, in a direction from the upstream liquid outlet channel 121 to the downstream liquid outlet channel 122, a distance between the transitional liquid outlet flow channel 123 and the axis N1 of stator mandrel 100 gradually increases. The gradual increase in the distance between the transitional liquid outlet flow channel 123 and the axis N1 optimizes a flowing path of the cooling medium through the transitional liquid outlet flow channel 123, thereby causing the cooling medium to flow more smoothly, and reducing the regions of flow stagnation of the cooling medium.

As shown in FIG. 4, in some embodiments, in a direction from the upstream liquid outlet channel 121 to the downstream liquid outlet channel 122, a flow area of the transitional liquid outlet flow channel 123 first gradually decreases and then gradually increases. The cooling medium enters the transitional liquid outlet flow channel 123 from the upstream liquid outlet channel 121. A flow area of the transitional liquid outlet flow channel 123 close to the upstream liquid outlet channel 121 first gradually decreases, and a rate of the cooling medium increases, so that the cooling medium approaches the downstream liquid outlet channel 122 at a higher rate, which improves altering of the cooling medium, and improves the heat dissipation efficiency. Then the cooling medium enters the downstream liquid outlet channel 122 from the transitional liquid outlet flow channel 123. A flow area of the transitional liquid outlet flow channel close to the downstream liquid outlet channel 122 gradually increases, and the cooling medium enters the downstream liquid outlet channel 122 at a decreased rate. In this way, the cooling medium can fully exchange heat with the stator mandrel 100 corresponding to the downstream liquid outlet channel 122, thereby further improving a utilization and heat exchange efficiency of the cooling medium.

As shown in FIG. 3, in some embodiments, the downstream liquid outlet channel 122 includes a liquid outlet transition section 1221 adj acent to an outlet end 120 of the liquid outlet channel 12, and a radial dimension of the liquid outlet transition section 1221 gradually decreases in a direction toward the outlet end 120. On the liquid outlet transition section 1221, the liquid outlet transition section 1221 has a smallest radial dimension at the outlet end 120, which increases the rate at which the cooling medium flows out of the cooling water channel, reduces the regions of flow stagnation of the cooling medium, and improves the heat exchange efficiency.

As shown in FIG. 2 to FIG. 4, in conjunction with the embodiments of the liquid outlet channel 12 and the liquid inlet channel 11, the liquid outlet channel 12 and the liquid inlet channel 11 are symmetrically arranged along the axis N1 of the stator mandrel 100, which optimizes a force transmission path and improves structural stability. It should be further noted that, in some embodiments, the liquid outlet channel 12 and the liquid inlet channel 11 may have a same structure, except that the cooling medium flows in different directions in the liquid outlet channel 12 and the liquid inlet channel 11. The cooling medium first enters the liquid inlet channel 11 and then enters the liquid outlet channel 12. After entering the liquid inlet channel 11, the cooling medium exchanges heat with the stator mandrel 100. Specifically, the cooling medium absorbs the heat on the stator mandrel 100 when flowing in the liquid inlet channel 11. After the heat exchange, the cooling medium enters the liquid outlet channel 12 and flows out of the liquid outlet channel 12. In the process, the cooling medium can still exchange heat.

As shown in FIG. 1, FIG. 2, and FIG. 5, in some other optional examples, the water inlet end 101 and the water outlet end 102 are located on an end of the stator mandrel 100 in the axial direction and on an end surface of the stator mandrel 100. Optionally, the water inlet end 101 and the water outlet end 102 may be located on the shaft wall 10 of the stator mandrel 100 and constructed as through holes on the shaft wall 10 of the stator mandrel 100.

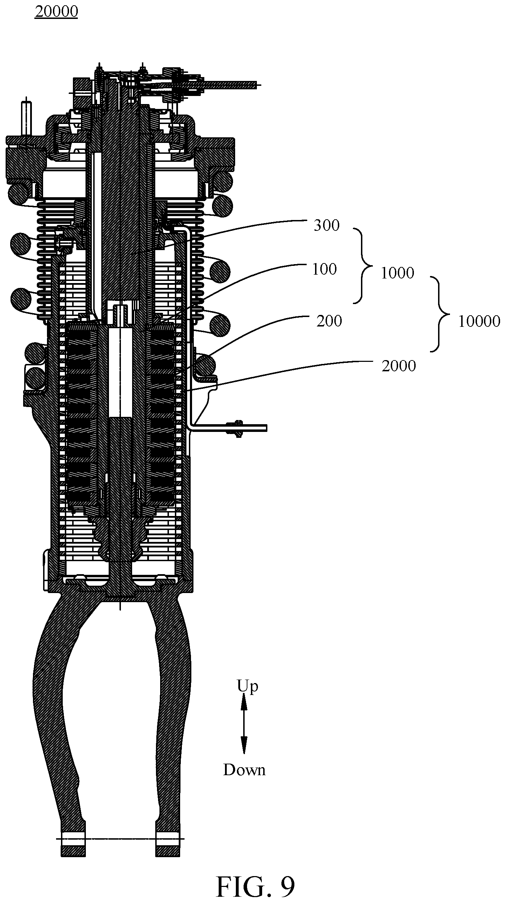

As shown in FIG. 9, the stator assembly 1000 in the embodiments of the present disclosure includes the excitation assembly 200, a conductive assembly 300, and the stator mandrel in the foregoing embodiments of the present disclosure 100. The excitation assembly 200 is arranged on an outer side of the stator mandrel 100 corresponding to the downstream liquid inlet channel 112. The downstream liquid inlet channel 112 can exchange heat with the excitation assembly 200. The conductive assembly 300 is arranged on the stator mandrel 100 corresponding to the upstream liquid inlet channel 111. The upstream liquid inlet channel 111 can exchange heat with the conductive assembly 300.

According to the stator assembly 1000 in the embodiments of the present disclosure, the foregoing stator mandrel 100 is arranged, and the footprint of the downstream liquid inlet channel 112 in the circumferential direction of the stator mandrel 100 is greater than the footprint of the upstream liquid inlet channel 111 in the circumferential direction of the stator mandrel 100, which helps reduce the impact on the structural strength of the stator mandrel 100, increase the footprint of the liquid inlet channel 11 in the circumferential direction of the stator mandrel 100, and increase the contact area between the cooling medium and the stator mandrel 100, thereby improving the heat dissipation capability and the heat dissipation efficiency of the stator mandrel 100. In this way, a damage probability of the stator assembly 1000 is reduced, and a service life of the stator assembly 1000 is increased.

As shown in FIG. 9, the linear motor 10000 in the embodiments of the present disclosure includes a mover assembly 2000 and the stator assembly 1000 in the foregoing embodiments of the present disclosure. The stator assembly 1000 and the mover assembly 2000 are electromagnetically coupled to drive the mover assembly 2000 to move.

In some specific examples, the mover assembly 2000 moves linearly to the stator assembly 1000 along the axis N1 of the stator assembly 1000.

According to the linear motor 10000 in the embodiments of the present disclosure, the foregoing stator assembly 1000 is arranged, and the footprint of the downstream liquid inlet channel 112 in the circumferential direction of the stator mandrel 100 is greater than the footprint of the upstream liquid inlet channel 111 in the circumferential direction of the stator mandrel 100, which helps reduce the impact on the structural strength of the stator mandrel 100, increase the footprint of the liquid inlet channel 11 in the circumferential direction of the stator mandrel 100, and increase the contact area between the cooling medium and the stator mandrel 100, thereby improving the heat dissipation capability and the heat dissipation efficiency of the stator mandrel 100. In this way, the entire linear motor 10000 operates more stably.

As shown in FIG. 9, the suspension system 20000 in the embodiments of the present disclosure includes the linear motor 10000 in the embodiments of the present disclosure.

According to the suspension system 20000 in the embodiments of the present disclosure, the foregoing linear motor 10000 is arranged, and the footprint of the downstream liquid inlet channel 112 in the circumferential direction of the stator mandrel 100 is greater than the footprint of the upstream liquid inlet channel 111 in the circumferential direction of the stator mandrel 100, which helps reduce the impact on the structural strength of the stator mandrel 100, increase the footprint of the liquid inlet channel 11 in the circumferential direction of the stator mandrel 100, and increase the contact area between the cooling medium and the stator mandrel 100, thereby improving the heat dissipation capability and the heat dissipation efficiency of the stator mandrel 100. In this way, the suspension system 20000 operates more stably.

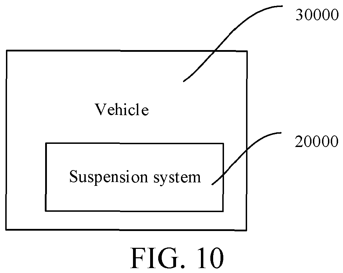

As shown in FIG. 10, the vehicle 30000 in the embodiments of the present disclosure includes the suspension system 20000 in the embodiments of the present disclosure.

According to the vehicle 30000 in the embodiments of the present disclosure, the foregoing suspension system 20000 is arranged, and the footprint of the downstream liquid inlet channel 112 in the circumferential direction of the stator mandrel 100 is greater than the footprint of the upstream liquid inlet channel 111 in the circumferential direction of the stator mandrel 100, which helps reduce the impact on the structural strength of the stator mandrel 100, increase the footprint of the liquid inlet channel 11 in the circumferential direction of the stator mandrel 100, and increase the contact area between the cooling medium and the stator mandrel 100, thereby improving the heat dissipation capability and the heat dissipation efficiency of the stator mandrel 100.

Other compositions and operations of the vehicle 30000 in the embodiments of the present disclosure are known to a person of ordinary skill in the art, and therefore are not described in detail herein.

In the description of this specification, descriptions provided with reference to the terms such as "an embodiment", and "an example" mean that specific features, structures, materials, or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more embodiments or examples.

Although the embodiments of the present disclosure are shown and described, a person of ordinary skill in the art may understand that, various changes, modifications, replacements, and variations may be made to the embodiments without departing from the principle and spirit of the present disclosure. The scope of the present disclosure is defined by the appended claims and their equivalents.

## Claims

1. A stator mandrel (100) for a linear motor, wherein a cooling water channel (1) being arranged in a shaft wall (10) of the stator mandrel (100);
the cooling water channel (1) comprising a liquid inlet channel (11), the liquid inlet channel (11) comprising an upstream liquid inlet channel (111) and a downstream liquid inlet channel (112) arranged in sequence in an axial direction of the stator mandrel (100) and the upstream liquid inlet channel (111) and the downstream liquid inlet channel (112) are in communication with each other; and
a radius angle corresponding to a circumferential direction of the downstream liquid inlet channel (112) being a first center angle α, a radius angle corresponding to a circumferential direction of the upstream liquid inlet channel (111) being a second center angle β, and α>β.

2. The stator mandrel (100) for a linear motor according to claim 1, wherein at least two downstream liquid inlet channels (112) are provided; two adjacent downstream liquid inlet channels (112) are spaced apart by a first water channel bar (201); at least one upstream liquid inlet channel (111) is provided; a quantity of the downstream liquid inlet channels (112) is greater than a quantity of the at least one upstream liquid inlet channel (111);
the first center angle α is a sum of radius angles corresponding to circumferential directions of the downstream liquid inlet channels (112); and the second center angle β is a sum of radius angles corresponding to circumferential directions of the at least one upstream liquid inlet channel (111).

3. The stator mandrel (100) for a linear motor according to claim 2, wherein the downstream liquid inlet channels (112) are arranged spaced away in a circumferential direction of the stator mandrel (100); the downstream liquid inlet channels (112) are arranged to extend in the axial direction of the stator mandrel (100); and
ends of the downstream liquid inlet channels (112) in communication with the upstream liquid inlet channel (111) are brought into communication in the circumferential direction to form a first arc connecting channel (1121).

4. The stator mandrel (100) for a linear motor according to claim 1, wherein inner walls of two ends of the downstream liquid inlet channel (112) in the circumferential direction are arc walls.

5. The stator mandrel (100) for a linear motor according to claim 1, wherein a distance between the upstream liquid inlet channel (111) and an axis of the stator mandrel (100) is greater than a distance between the downstream liquid inlet channel (112) and the axis of the stator mandrel (100); and
the liquid inlet channel (11) comprises a transitional liquid inlet flow channel (113) connected between the upstream liquid inlet channel (111) and the downstream liquid inlet channel (112).

6. The stator mandrel (100) for a linear motor according to claim 5, wherein in a direction from the upstream liquid inlet channel (111) to the downstream liquid inlet channel (112), a distance between the transitional liquid inlet flow channel (113) and the axis (N1) of the stator mandrel (100) gradually decreases.

7. The stator mandrel (100) for a linear motor according to claim 5, wherein in a direction from the upstream liquid inlet channel (111) to the downstream liquid inlet channel (112), a flow area of the transitional liquid inlet flow channel (113) first gradually decreases and then gradually increases.

8. The stator mandrel (100) for a linear motor according to claim 1, wherein the upstream liquid inlet channel (111) comprises a liquid inlet transition section (1111) adjacent to an inlet end (110) of the liquid inlet channel (11); and a flow area of the liquid inlet transition section (1111) gradually increases in a direction away from the inlet end (110).

9. The stator mandrel (100) for a linear motor according to any of claims 1 to 8, wherein the cooling water channel (1) comprises a liquid outlet channel (12); the liquid outlet channel (12) comprises an upstream liquid outlet channel (121) and a downstream liquid outlet channel (122) arranged in sequence in the axial direction of the stator mandrel (100) and in communication with each other;
the upstream liquid outlet channel (121) is in communication with the downstream liquid inlet channel (112);
a water inlet end (101) of the cooling water channel (1) is in communication with the upstream liquid inlet channel (111); a water outlet end (102) of the cooling water channel (1) is in communication with the downstream liquid inlet channel (112); and the water inlet end (101) and the water outlet end (102) are located on a same end of the stator mandrel (100),
preferably wherein a radius angle corresponding to a circumferential direction of the upstream liquid outlet channel (121) is a third center angle θ; a radius angle corresponding to a circumferential direction of the downstream liquid outlet channel (122) is a fourth center angle γ; and θ>γ,
more preferably wherein at least two upstream liquid outlet channels (121) are provided; two adjacent upstream liquid outlet channels (121) are spaced apart by a second water channel bar (202); at least one downstream liquid outlet channel (122) is provided; a quantity of the upstream liquid outlet channels (121) is greater than a quantity of the at least one downstream liquid outlet channel (122);
the third center angle θ is a sum of radius angles corresponding to circumferential directions of the upstream liquid outlet channels (121); and the fourth center angle γ is a sum of radius angles corresponding to circumferential directions of the at least one downstream liquid outlet channel (122),
most preferably wherein the upstream liquid outlet channels (121) and the at least one downstream liquid inlet channel (112) are arranged spaced away in the circumferential direction of the stator mandrel (100); the upstream liquid outlet channels (121) are arranged to extend in the axial direction of the stator mandrel (100); and
ends of the upstream liquid outlet channels (121) in communication with the downstream liquid outlet channel (122) are brought into communication in the circumferential direction to form a second arc connecting channel (1212).

10. The stator mandrel (100) for a linear motor according to claim 9, wherein the cooling water channel (1) comprises a turning connection channel (13); and the turning connection channel (13) is in communication with the upstream liquid outlet channel (121) and the downstream liquid inlet channel (112), and is located on ends of the upstream liquid outlet channel (121) and the downstream liquid inlet channel (112) away from the upstream liquid inlet channel (111),
preferably wherein a radial dimension of a flow channel is less than a radial dimension (H2) of the upstream liquid outlet channel (121), and/or the radial dimension of the flow channel is less than a radial dimension (H3) of the downstream liquid inlet channel (112).

11. The stator mandrel (100) for a linear motor according to claim 9, wherein a distance between the upstream liquid outlet channel (121) and the axis of the stator mandrel (100) is less than a distance between the downstream liquid outlet channel (122) and the axis of the stator mandrel (100); and
the liquid outlet channel (12) comprises a transitional liquid outlet flow channel (123) connected between the upstream liquid outlet channel (121) and the downstream liquid outlet channel (122),
preferably wherein in a direction from the upstream liquid outlet channel (121) to the downstream liquid outlet channel (122), a distance between the transitional liquid outlet flow channel (123) and the axis of stator mandrel (100) gradually increases;
or wherein in a direction from the upstream liquid outlet channel (121) to the downstream liquid outlet channel (122), a flow area of the transitional liquid outlet flow channel (123) first gradually decreases and then gradually increases;
or wherein the downstream liquid outlet channel (122) comprises a liquid outlet transition section (1221) adjacent to an outlet end (120) of the liquid outlet channel (12); and a radial dimension of the liquid outlet transition section (1221) gradually decreases in a direction toward the outlet end (120).

12. A stator assembly (1000), comprising:
a stator mandrel (100), the stator mandrel (100) being the stator mandrel (100) according to any of claims 1 to 11;
an excitation assembly, the excitation assembly being arranged on an outer side of the stator mandrel (100) corresponding to the downstream liquid inlet channel (112), and the downstream liquid inlet channel (112) being configured to exchange heat with the excitation assembly; and
a conductive assembly, the conductive assembly being arranged on the stator mandrel (100) corresponding to the upstream liquid inlet channel (111), and the upstream liquid inlet channel (111) being configured to exchange heat with the conductive assembly.

13. A linear motor (10000), comprising:
a mover assembly (2000); and
a stator assembly (1000), the stator assembly (1000) being the stator assembly (1000) according to claim 12, and the stator assembly (1000) and the mover assembly (2000) being electromagnetically coupled to drive the mover assembly (2000) to move.

14. A suspension system (20000), comprising the linear motor (10000) according to claim 13.

15. A vehicle (30000), comprising the suspension system (20000) according to claim 14.
